# EUROPEAN PATENT APPLICATION

(11) **EP 0 809 934 A2**
(43) Date of publication of application: **03.12.1997**
(21) Application number: 97610018.0
(22) Date of filing: 23.05.1997
(51) Int. Cl.: A01K 5/00

(54) **Dispensing system for feedstuff**

(30) Priority: 28.05.1996 DK 608/96
(71) Applicant: SKIOLD MULLERUP A/S, 5540 Ullerslev (DK)
(72) Inventor: Pedersen, Poul Kingo, 5300 Kerteminde (DK)
(74) Representative: Lund, Preben

(57) **Abstract**

Mixing and dispensing apparatus for automatic feeding systems in sheds consisting of a trough (1) for holding feedstuff, said trough being provided with a discharge opening (2), and where at the bottom of the trough (1) there is arranged a horizontally extending, rotating shaft (3) provided with two sets of arms (4, 5;6, 7). Each set of arms is connected to a carrier (8, 9) which engages a lower (26) cylindrical inner wall of the trough (1). The carrier (8, 9) consists of a straight connecting rod (12, 13) and two connecting members (14) being provided at the free ends thereof with hinge joints (11) for hinging the carrier (8, 9) to the respective arms (4, 5;6, 7). Springs (15) are arranged between the carrier (8, 9) and the shaft (3) which force the carrier towards the wall of the trough.

## Description

### State of the art

The present invention relates to a mixing and dispensing apparatus, preferably for automatic feeding systems in sheds, consisting of a trough for holding material, preferably feedstuff, wherein said trough is provided with a discharge opening, and where at the bottom of the trough there is arranged a preferably horizontally extending, rotating shaft provided with at least one set of radially extending arms, which is connected to a connecting rod which engages and by rotation travels in close proximity along a lower, preferably cylindrical, inner wall of the trough.

The present invention particularly relates to feeding systems for untethered cattle, for example in a cattle yard. in such cattle yards feedstutt is normally weighed out and poured out into a mixing carriage for feedstuff at a station outside the cowshed. The feedstuff is then mixed therein by means of an external power source and taken into the cowshed, where it is spread on for example a feeding table. The feedstuff may consist of various course structures which together form a complete fullfeed for cattle, for example a mixture of straw from straw bales, course-cut silage, fine concentrates, mineral dust, liquid molasses, soy bean cakes etc. The course feed may accordingly consist of components such as big lumps of compressed straw, lumps of concentrates etc.

In document GB-A-2 035 822 a mixing and discharging trailer for animal feedstuff such as silage, concentrates and straw is described. The apparatus, which is mounted on a trailer, has the shape of a trough, is open at its top and holds a longitudinally extending agitator unit, the peripheral members of which travel closely along the lower part of the trough in that said part is partly designed as a cylinder surface. Longitudinal bars or blades are mounted on the peripheral members of the agitator for distributing the feedstuff. A smaller agitator having a set of radial pointed tines cooperates with the longitudinally extending agitator unit and carries the swept feedstuff over an edge of the trough such that the feedstuff is spread from the side of the trough.

The preamble of claim 1 is based on this document.

The known mixing mechanisms of this kind are exposed to hard wear on the trough surfaces in the proximity of the rotating members in that the feedstuff is often rough, has a high inner frictional resistance and a high frictional resistance to steel. The wear increases by the wedge effect occurring between the agitator and the housing surrounding the cylinder.

In order to reduce the above-mentioned wedge effect, it is known to design the peripheral agitator parts as inclined knives. However, this may contribute to unnecessarily divide the feedstuff into fine particles.

Generally speaking, the efficiency of the known mechanisms is low since the high level of friction results in a high initial and operative moment.

One aspect of the present invention is to provide a mixing and dispensing apparatus which will reduce the energy consumption for mixing, and which is at the same time wear-resistant and which will moreover function without additional transport wheels or dispensing worms.

This is achieved by the mixing and dispensing apparatus defined according to claim 1.

The hinged carrier swings elastically back when meeting any obstacles such as lumps of material being wedged between carrier and trough. This will reduce the wedge effect which also reduces the required initial and operative moment, which again will have a positive influence on the dimensioning of the transmission members and thereby the the weight and costs thereof as well as the energy consumption of the equipment. Furthermore, the functional reliability has increased.

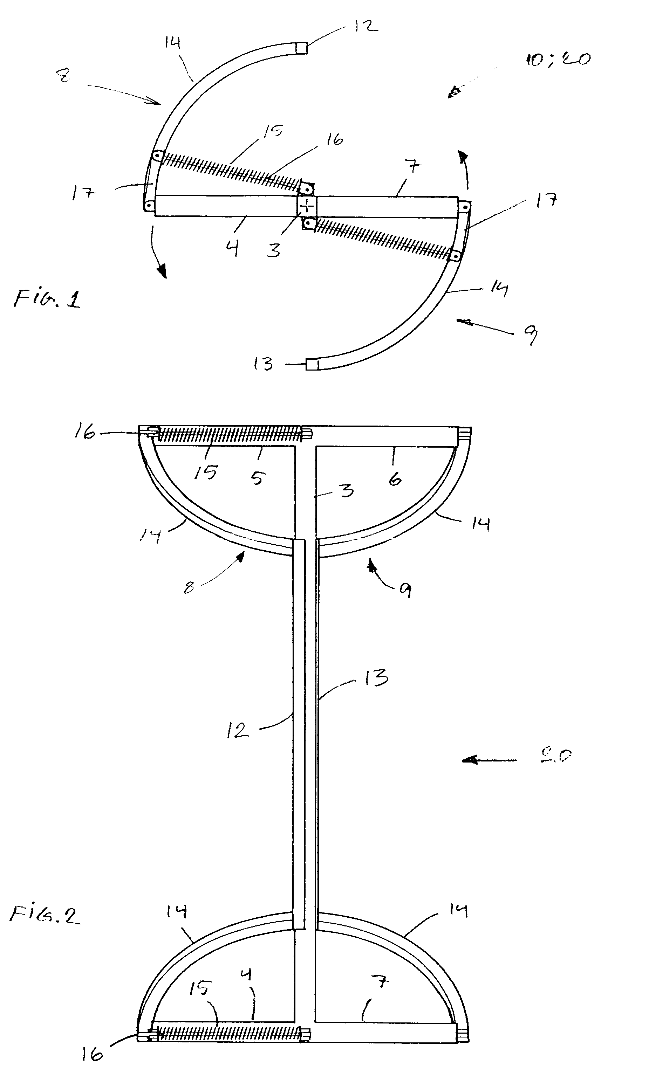

In a particular embodiment of the invention, see fig. 2, there are provided two diametrically arranged, identically designed carriers. An optimal weight distribution of the power transmission components is thereby obtained.

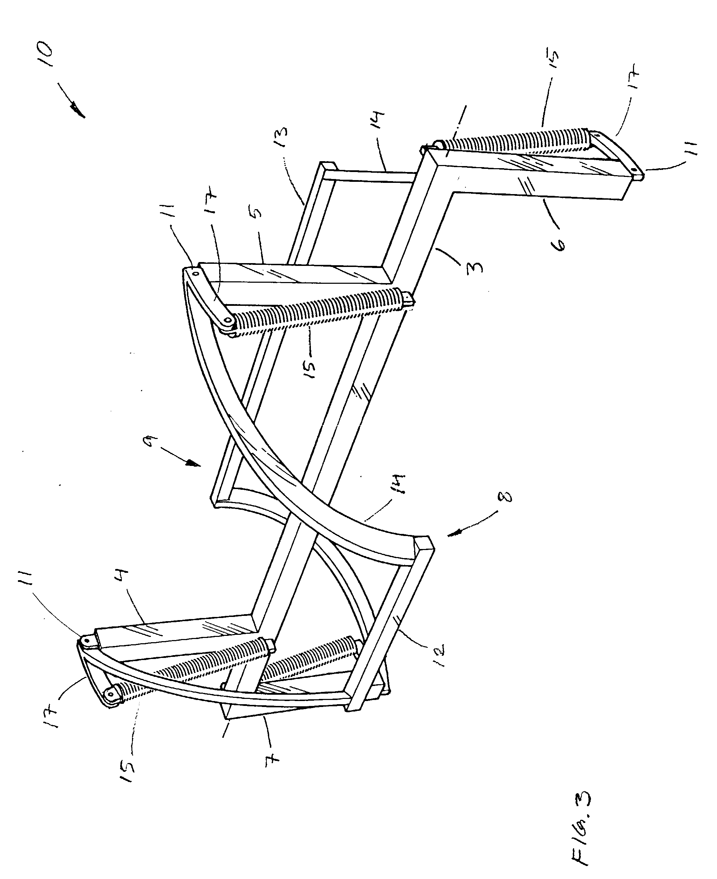

In another particular embodiment, see fig. 3, the carriers have different lengths. This will result in a slower dispensing of material.

The low energy consumption and weight combined with the high level of functional reliability of the mixing and dispensing apparatus makes it particularly advantageous to use in connection with computerised automatic feeding systems.

The invention will now be further explained with reference to the drawings, wherein
fig. 1 is an end view of the mixing mechanism according to the invention,
fig. 2 is a first embodiment of the mixing mechanism,
fig. 3 is a second embodiment of the mixing mechanism,
fig. 4 is a carriage for feedstuff and a rail body used in connection with the invention, and
fig. 5 is a top view of a carriage for feedstuff.

Figs. 1 and 2 show a mixing mechanism 10, 20 for a mixing and dispensing apparatus consisting of a shaft 3 provided with a first set of parallel arms 4, 6 and a second set of parallel arms 5, 7 extending radially of the shaft 3. At the end of each set of arms there is arranged a carrier 8, 9, which is slideably arranged relative to the involved set of arms 4, 5; 6, 7 via a set of hinge joints 11. A carrier 8, 9 consists of a preferably straight connecting rod 12, 13, which at either end is connected to a screw-shaped or spiral-shaped connecting member 14 which in its turn is connected to the hinge joints 11 mounted on the respective set of arms 4, 5; 6, 7. Each of the carriers 8, 9 is stretched radially of the shaft 3 by springs 15 mounted between the shaft 3 and a pair of outer rods 17, which are secured to each of the connecting members 14 at the hinge joint 11 in question. The springs 15 are mounted on spindles 16 provided with stop nuts (not shown).

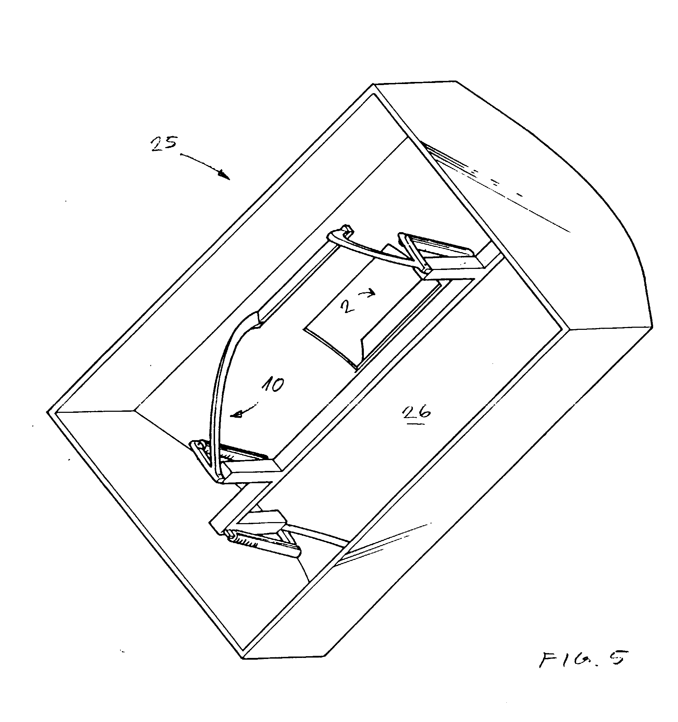

The mixing mechanism 10, 20 is horizontally mounted at the bottom of a trough 1, the length of which extends substantially beyond the diametre of the mixing and dispensing mechanism 10, 20. The trough 1 forms part of a feedstuff carriage 25, as shown in fig. 5, and has a lower part 26 describing a section of a cylinder surface, wherein there is provided a discharge opening 2 with a cover 29, which can be opened by a first electric motor 19, for discharging feedstuff.

The springs 15 are mounted on spindles 16 provided with stop nuts which are adjustable in such a manner that the carriers are exactly prevented from touching the close cylindrical lower parts of the trough's surfaces.

The spiral-shaped connecting members 14 describe for example sectors of a circle viewed from the end of the mixing mechanism 10, 20, see fig. 1, and therefore follow the cylindrical lower part of the trough 1.

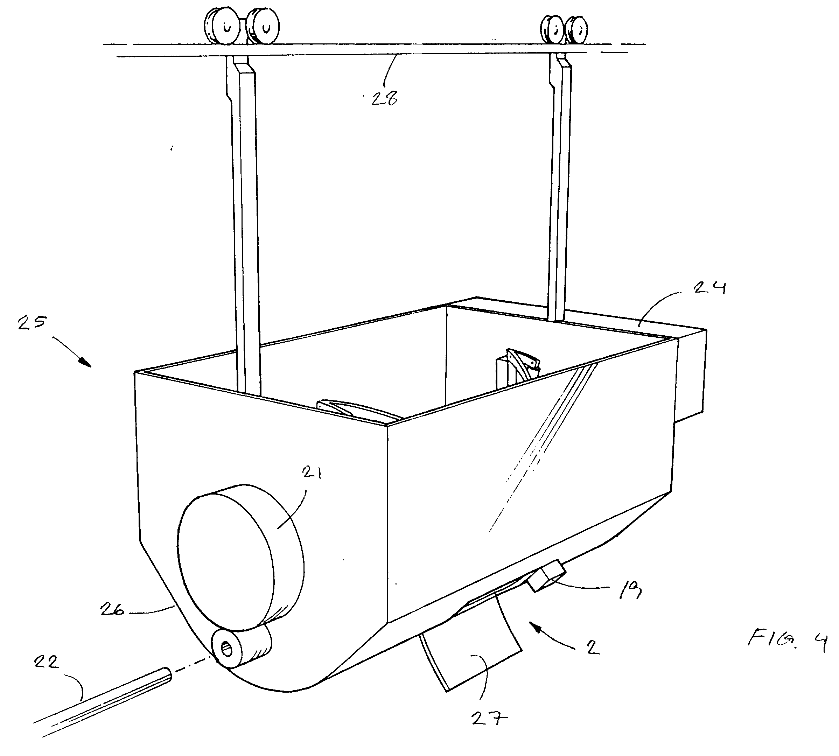

When in operative use, the feedstuff carriage shown in figs. 4 and 5, which may be part of a fully automatic, computerised feeding system, is loaded with various feedstuff components in a filling/mixing station, which is for example situated outside the cowshed area itself.

The mixing mechanism 10, 20 is then rotated counterclockwise, as shown by arrows in fig. 1, by means of an external power take-off 22 and a mechanical gear (21) comprising a free wheel mounted on the feedstuff carriage (25), as indicated in fig. 4, so that a mixing of the feedstuff takes place.

The carriers 8, 9 rotate in close proximity along the lower part 26 of the trough 1 thereby ensuring that the feedstuff components are lifted and swept along so that a complete mixing of the feedstuff takes place.

Since the carriers 8, 9, when exposed to a certain stress, bend elastically in a rearward direction and away from the surfaces of the trough, the carriers will yield to lumps of feedstuff material that may have been formed on the sides of the trough.

When the feedstuff has been mixed to a sufficient degree, the carriage 25 is moved into the cowshed area on a rail body 28 ready for being dispensed. The cover 27 for the discharge opening 2 is opened and the mixing mechanism 10, 20 is again rotated for dispensing the feedstuff. This rotation is powered by a second electric motor (not shown) driven by a rechargeable battery 24, which is recharged when the carriage 25 returns to the mixing station.

A cover for the -discharge opening is automatically opened by means of a first electric motor 19. Feedstuff is subsequently dispensed through the discharge opening 2 by an amount adapted to the rate of speed. The spiral-shaped connecting members 14 cause an axial transportation of the feedstuff towards the centre of the trough when the carrier 8, 9 rotates so that all the feedstuff in the trough is eventually accumulated in the centre and dispensed through the opening, the length of which is shorter than the total length of the trough.

Fig. 2 shows an embodiment of the mixing mechanism 20 wherein the carriers 8, 9 are identical and mounted in such a manner that the arms 4,5,6,7 are arranged opposite each other close to the end surfaces of the trough.

Fig. 3 shows an alternative embodiment of the mixing mechanism 10 wherein one of the carriers 8 is designed in such a manner that it has a shorter effective area of contact relative to the length of the trough such that this short carrier 8 will only take along a certain part of the amount of feedstuff, which is present at the bottom of the trough. The arms 4, 5 of the shorter carrier 8 are mounted on the shaft opposite the positions of the longer carrier 9 which pass into the respective connecting members 14. At the same time the length of the discharge opening 2 is adapted to this shorter carrier 8 which will result in a slower dispensing of feedstuff.

Practical tests have shown that wedging of feedstuff never occurs and that the initial and operative moment is relatively low resulting in a high level of reliability of the mixing and dispensing mechanism and in a low level of energy consumption and a low weight of the complete feedstuff carriage.

Since the mixing and dispensing steps are performed by a single unit, the feedstuff carriage may be made very narrow which is advantageous in many cowshed systems.

### Reference list

- trough: 1
- discharge opening: 2
- shaft: 3
- arms: 4,5;6,7
- carrier: 8;9
- mixing mechanism: 10
- hinge joint: 11
- connecting rod: 12;13
- connecting members: 14
- spring: 15
- spindle: 16
- rod: 17
- end walls: 18
- first electric motor: 19
- alternative mixingmechanism: 20
- mechanical gear: 21
- external power source: 22
- second electric motor: 23
- battery: 24
- feedstuff carriage: 25
- lower part: 26
- cover: 27
- rail: 28

## Claims

1. Mixing and dispensing apparatus, preferably for automatic feeding systems in sheds, consisting of a trough (1) for holding material, preferably feedstuff, wherein said through is provided with a discharge opening (2) and where at the bottom of the trough (1) there is arranged a preferably horizontally extending, rotating shaft (3) provided with at least one set of arms (4, 5;6, 7) which is connected to a carrier (8, 9) which engages a lower (26), preferably cylindrical, inner wall of the trough (1), **characterised in** that each arm (4, 5;6, 7) is provided with a hinge joint (11) at the end opposite the shaft (3) and in that the carrier (8, 9) consists of a connecting rod (12; 13), which at least partially extends parallel to the rotating shaft (3), and two connecting members (14) at the free ends whereof other hinge joints (11) are mounted for hinging the carrier (8; 9) to the respective arms (4, 5;6, 7), and in that at least one spring means is arranged between the carrier (8; 9) and the shaft (3) which is provided for carrying the carrier (8; 9) towards the wall of the through.

2. Mixing and dispensing apparatus according to claim 1, **characterised in** that each of the connecting members (14) is designed as a part of a screw or spiral turn such that material is moved axially towards the centre when the carrier (8; 9) is rotating.

3. Mixing and dispensing apparatus according to claim 1 or 2, **characterised in** that a stop means is provided preventing the carrier (8; 9) from moving further than a certain distance from the shaft (3).

4. Mixing and dispensing apparatus according to claim 3, **characterised in** that the spring means is a spiral spring (15) and that the stop means is a spindle (16) provided within the spring (15).

5. Mixing and dispensing apparatus according to one of the preceding claims, **characterised in** that there is provided a total of two carriers (8; 9).

6. Mixing and dispensing apparatus according to claim 5, **characterised in** that the two carriers (8; 9) are identical and arranged opposite each other having their arms (4, 5;6, 7) mounted diametrically opposed to each other at the respective end walls of the trough (1).

7. Mixing and dispensing apparatus according to claim 5, **characterised in** that one of the carriers (8) is shorter than the other one (9) and that a respective arm (4, 5) of the short carrier (8) is placed on the shaft (3) in a first position corresponding to the projection of a point situated at the transition between connecting rod (13) and connecting member (14) of the long carrier (9) projected on the shaft (3).

8. Mixing and dispensing apparatus according to one of the preceding claims, **characterised in** that in the discharge opening (2) there is arranged an oblong opening provided at the centre of the trough and a cover (27) to be opened and closed by means of a first electric motor (19).

9. Mixing and dispensing apparatus according to one of the preceding claims, **characterised in** that the mixing and dispensing apparatus suspends from a rail body (28) above the trough (1).

10. Mixing and dispensing apparatus according to one of the preceding claims, **characterised in** that a mechanical gear (21) is provided on the trough (1), which acts on the shaft (3) and which can be connected to the take-off (22) of an external power source and that a battery (24) and a second electric motor driving the shaft (3) are moreover provided on the mixing and dispensing apparatus.

11. Method for using a mixing and discharging apparatus defined by claim 10, **characterised in** that the mixing process takes place by engaging an external power source and that the dispensing process takes place by connecting the second electric motor and the battery (24).
